# EUROPÄISCHE PATENTSCHRIFT

(11) **EP 2 081 803 B1**
(45) Veröffentlichungstag und Bekanntmachung des Hinweises auf die Patenterteilung: **08.12.2010**
(21) Anmeldenummer: 07820060.7
(22) Anmeldetag: 07.09.2007
(51) Int. Cl.: B60S 1/38

(54) **WISCHBLATT**
WIPER BLADE
BALAI D'ESSUIE-GLACE

(30) Priorität: 16.10.2006 DE 102006048724
(43) Veröffentlichungstag der Anmeldung: 29.07.2009
(73) Patentinhaber: Robert Bosch GmbH, 70442 Stuttgart (DE)
(72) Erfinder: DE BLOCK, Peter, 3545 Halen (BE); WINDMOLDERS, Eric, 3510 Kermt (BE); SAEVELS, Peter, 3384 Attenrode (BE); SUFFELEERS, Geert, 3560 Lummen (BE)
(86) Internationale Anmeldenummer: PCT/EP2007/059393
(87) Internationale Veröffentlichungsnummer: WO 2008/046690

(56) Entgegenhaltungen:
- EP-A- 0 943 511
- WO-A-01/62559

## Beschreibung

### Stand der Technik

Die Erfindung geht von einem Wischblatt nach dem Oberbegriff des Anspruchs 1 aus.

Aus der WO-A2-01/62559 ist ein Wischblatt für Scheibenwischer von Kraftfahrzeugen bekannt, das eine Wischleiste mit einer Kopfleiste und einer daran sich über einen Kippsteg anschließende Wischlippe besitzt. Die Kopfleiste weist zwei seitliche Längsnuten auf, in die Federschienen eingesetzt sind. Diese dienen als ein federelastisches Tragelement, sodass kein weiteres Tragbügelsystem erforderlich ist. Vielmehr wird das Wischblatt über ein etwa mittig angeordnetes Anschlusselement gelenkig mit einem Wischarm verbunden. An den Enden werden die Federschienen, die zum Teil seitlich aus den Längsnuten der Kopfleiste vorstehen, durch einen Brückenbogen zusammengehalten. Dieser ist mit parallel zu den Federschienen verlaufenden, nach außen weisenden Stützfüßen, an den Federschienen befestigt, z.B. durch Schweißen. Der Brückenbogen überbrückt eine Rückenleiste der Kopfleiste, die die Längsnuten nach oben begrenzt. An dem Brückenbogen ist eine Lasche angeformt, die sich in Längsrichtung des Wischblatts zu dessen Mitte hin erstreckt und mit einer an ihrem freien Ende angeformten Kralle bei der Montage in die Rückenleiste des Wischgummis gedrückt wird. Somit wird die Lage der Federschienen zueinander und relativ zum Wischgummi gesichert. Die Brückenbögen und die Stützfüße werden durch Schutzkappen abgedeckt.

### Offenbarung der Erfindung

Nach der Erfindung erstreckt sich der Stützfuß in Längsrichtung der Federschienen über den Brückenbogen hinaus. Die größere Stützlänge, vorzugsweise mit jeweils zwei Verbindungsstellen an einem Ende der Federschienen, macht die Verbindung der beiden Federschienen miteinander deutlich steifer und reduziert die Torsions- und Abscherkräfte, die auf die Verbindung einwirken. Ferner erhöht sich die Dauerfestigkeit der Verbindung gegen Aufprallen des Wischblatts auf die Fahrzeugscheibe und beim Arbeiten gegen eine Schneelast, z.B. im Schneelasttest oder bei entsprechenden Witterungsbedingungen, bei denen das Wischfeld durch die Schneelast eingeengt ist. In diesen Fällen werden die Verbindungsstellen zwischen den Stützen und den Federschienen sehr stark belastet und dies vor allem am Außenkreis des Wischblatts. Zweckmäßigerweise kann die Stützlänge der Stützfüße an einem Ende einer Federschiene größer als die halbe Spannweite des Brückenbogens sein.

Bei den Ausführungen nach dem Stand der Technik ist nicht gewährleistet, dass die Verbindungen, seien es Schweißverbindungen oder auch andere Verbindungen, z.B. durch Toxen, Verstemmen und Umlappen hergestellte, auf Dauer den hohen Belastungen standhalten. Die Stützlänge kann auf verschiedene Weise verlängert werden, z.B. indem die Stützfüße in Längsrichtung der Federschiene entsprechend verlängert sind und zweckmäßigerweise mehrere Verbindungsstellen aufweisen, insbesondere zwei Verbindungsstellen. Dabei ist es vorteilhaft, dass an dem Brückenbogen eine zur Mitte des Wischblatts weisende Lasche mit einer Fixierkralle angeordnet ist, deren freies Ende zweckmäßigerweise innerhalb der Stützlänge liegt. Die Fixierkralle wird bei der Montage in eine Brückenleiste der Wischleiste gedrückt, sodass die Federschienen in Längsrichtung relativ zur Wischleiste fixiert sind.

Bei einer anderen Ausgestaltung der Erfindung sind an den Enden jeweils zwei Brücken mit einem Abstand voneinander vorgesehen, sodass die Stützen und der Abstand eine ausreichende Stützlänge ergeben. Dabei kann es zweckmäßig sein, dass die Brücken gemeinsame Stützen besitzen, die jeweils zwei Verbindungsstellen mit der zugeordneten Federschiene aufweisen.

### Kurze Beschreibung der Zeichnungen

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

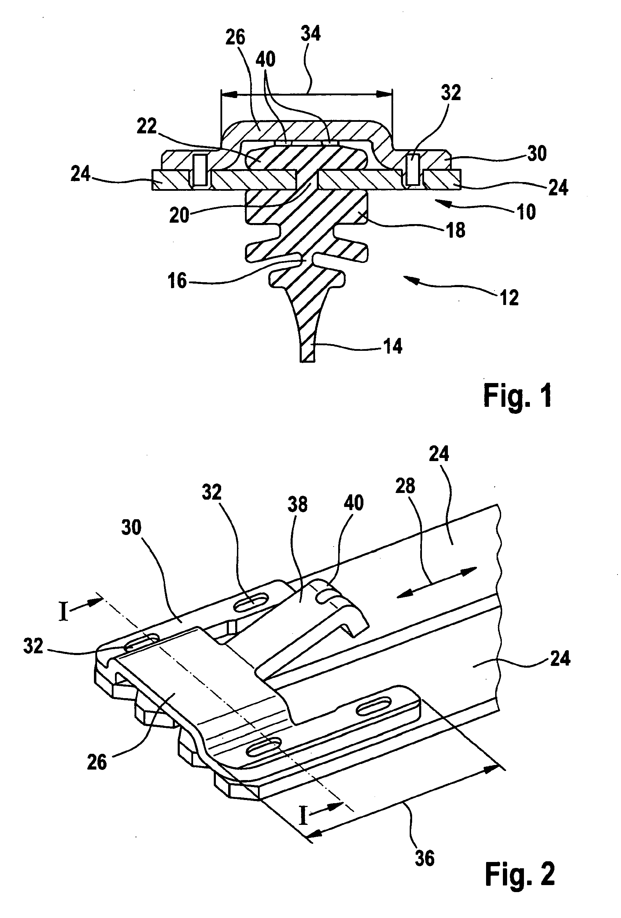

Fig. 1 einen Querschnitt durch ein Ende eines Wischblatts entsprechend der Linie I-I in Fig. 2,
Fig. 2 eine perspektivische Ansicht eines Endes eines Wischblatts nach Fig. 1 ohne Wischleiste,
Fig. 3 und Fig. 4 Varianten zu Fig. 2.

### Ausführungsformen der Erfindung

Ein Wischblatt 10 besitzt eine Wischleiste 12, deren Wischlippe 14 über einen Kippsteg 16 mit einer Kopfleiste 18 verbunden ist. Die Kopfleiste 18 weist zwei einander gegenüberliegende Längsnuten auf, die zwischen sich einen Steg 20 bilden. Dieser verbindet einen als Rückenleiste 22 bezeichneten Teil der Kopfleiste 18 auf der der Wischlippe 14 abgewandten Seite der Wischleiste 12 mit dem übrigen Teil der Kopfleiste 18. In die Längsnuten sind flache, bandförmige Federschienen 24 eingesetzt, die im unbelasteten Zustand zur Seite der Wischlippe 14 hin konkav gekrümmt sind und für eine geeignete Druckverteilung der Anpresskraft des Wischblatts 10 an eine nicht dargestellte Fahrzeugscheibe sorgen.

An den Enden des Wischblatts 10 sind die Federschienen 24 durch mindestens einen Brückenbogen 26 miteinander verbunden. Dieser überbrückt die Rückenleiste 22 und ist über Stützfüße 30 und jeweils zwei Befestigungsstellen 32 je Ende der Federschiene 24 mit der Federschiene 24 fest verbunden. Die Verbindung kann durch Schweißen mit geeigneten Schweißverfahren, Toxen, Verstemmen und Umlappen ausgeführt werden. Um eine ausreichende Dauerfestigkeit und Torsionssteifigkeit des Wischblatts 10 unter extremen Bedingungen zu gewährleisten, erstreckt sich der Stützfuß 30 in Längsrichtung 28 der Federschienen 24 über den Brückenbogen 26 hinaus. Zweckmäßigerweise hat der Stützfuß 30 in Längsrichtung 28 eine Stützlänge 36, die gleich oder größer ist als die halbe Spannweite 34 des Brückenbogens 26. An dem Brückenbogen 26 ist eine Lasche 38 angeformt. Diese weist zur Mitte des Wischblatts 10 und besitzt an ihrem freien Ende eine Fixierkralle 40, die bei der Montage in die Rückenleiste 22 der Wischleiste eingedrückt wird und somit die Lage der Federschienen 24 relativ zur Wischleiste 12 sichert.

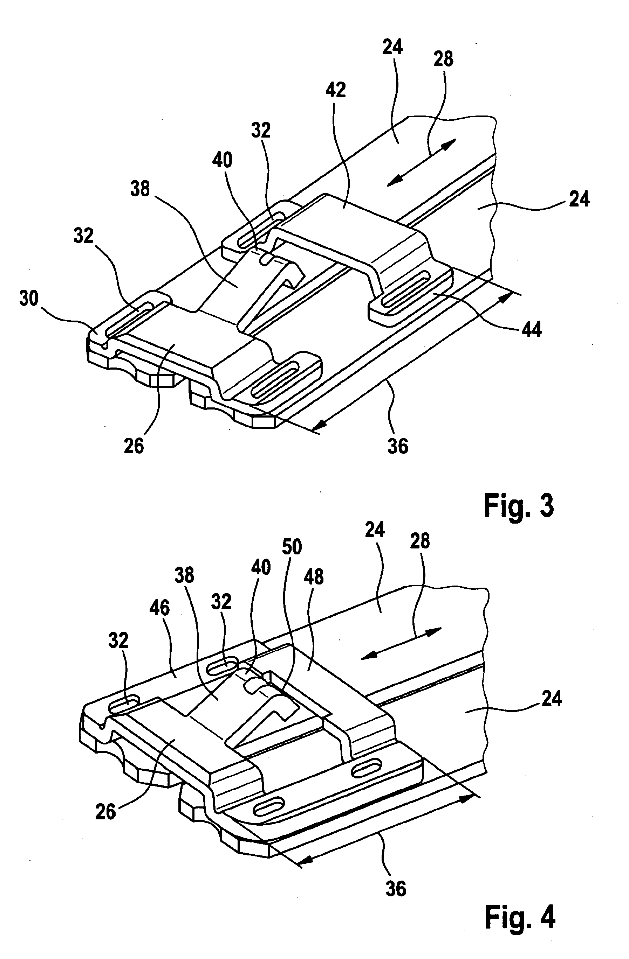

Bei der Ausführung nach Fig. 3 sind an einem Ende der Federschienen 24 zwei Brückenbögen 26, 42 vorgesehen, die in einem Abstand zueinander angeordnet sind. Die zugehörigen Stützfüße 30, 44 sind mit jeweils einer Befestigungsstelle 32 an den zugeordneten Federschienen 24 befestigt. Der Abstand der Stützfüße 30 und 44 voneinander ergeben mit der Erstreckung der Stützfüße 30 und 44 eine ausreichende Stützlänge 36. Die Lasche 38 mit der Fixierkralle 40 ist an einem der Brückenbögen 26, 42 angeformt und weist in den Zwischenraum zwischen den Brückenbögen 26, 42.

Bei der Ausführung nach Fig. 4 sind an einem Ende der Federschienen 24 ebenfalls zwei Brückenbögen 26 und 48 vorgesehen, die im Abstand zueinander angeordnet sind. Anders als bei der Ausführung nach Fig. 3 ist auf jeder Seite der Brückenbögen 26, 48 ein gemeinsamer Stützfuß 46 je Federschiene 24 angeordnet. Auch hierbei ist die Lasche 38 mit ihrer Fixierkralle 40 an eine der Brückenbögen 26 bzw. 48 angeformt und weist mit ihrem freien Ende in den Zwischenraum zwischen den Brückenbögen 26, 48. Um bei gleichem Abstand der Brückenbögen 26, 48 eine längere Lasche 38 vorsehen zu können, besitzt der Brückenbogen 48 auf der der Lasche 38 zugewandten Seite eine Aussparung 50.

## Patentansprüche

1. Wischblatt (10) mit einer Wischleiste (12), in deren seitliche Längsnuten als federelastisches Tragelement zwei Federschienen (24) eingesetzt sind, wobei die Enden der Federschienen (24) durch mindestens einen Brückenbogen (26, 42, 48) miteinander verbunden sind, indem sich der Brückenbogen (26, 42, 48) über Stützfüße (30, 44, 46) an den oberen Seiten der Federschienen (24) abstützt, mit den Federschienen (24) fest verbunden ist und eine die Längsnuten nach oben begrenzende Rückenleiste (22) überbrückt, **dadurch gekennzeichnet, dass** sich der Stützfuß (30, 44, 46) in Längsrichtung (28) der Federschienen (24) über den Brückenbogen (26, 42, 48) hinaus erstreckt.

2. Wischblatt (10) nach Anspruch 1, **dadurch gekennzeichnet, dass** die Stützlänge (36) des Stützfußes (30, 46) bzw. der Stützfüße (30, 44) an einem Ende einer Federschiene (24) größer ist als die halbe Spannweite (34) des Brückenbogens (26, 42, 48).

3. Wischblatt (10) nach Anspruch 1 oder 2, **dadurch gekennzeichnet, dass** die Stützfüße (30, 46) über jeweils zwei Verbindungsstellen (32) mit den Federschienen (24) verbunden sind.

4. Wischblatt (10) nach Anspruch 2 oder 3, **dadurch gekennzeichnet, dass** an dem Brückenbogen (26) eine zur Mitte des Wischblatts (10) weisende Lasche (38) mit einer Fixierkralle (40) angeordnet ist, deren freies Ende innerhalb der Stützlänge (36) liegt.

5. Wischblatt (10) nach einem der Ansprüche 1 bis 4, **dadurch gekennzeichnet, dass** an den Enden der Federschienen (24) jeweils zwei Brückenbögen (26, 42 bzw. 48) mit einem Abstand voneinander vorgesehen sind, sodass die Stützfüße (30, 44 bzw. 46) und der Abstand eine ausreichende Stützlänge (36) ergeben.

6. Wischblatt (10) nach Anspruch 5, **dadurch gekennzeichnet, dass** die Brückenbögen (26, 48) gemeinsame Stützfüße (46) mit jeweils zwei Verbindungsstellen (32) mit der zugeordneten Federschiene (24) besitzen.

7. Wischblatt (10) nach Anspruch 5 oder 6, **dadurch gekennzeichnet, dass** die Lasche (38) mit der Fixierkralle (40) zwischen den Brücken (26, 46 bzw. 48) angeordnet ist.

8. Wischblatt (10) nach Anspruch 7, **dadurch gekennzeichnet, dass** der Brückenbogen (48), der dem Brückenbogen (26) mit der Lasche (38) gegenüberliegt, eine zur Lasche (38) weisende Aussparung (50) aufweist.

## Claims

1. Wiper blade (10) with a wiper strip (12), into the lateral longitudinal grooves of which two spring rails (24) are inserted as a spring-elastic supporting element, wherein in the ends of the spring rails (24) are connected to each other by at least one bridge arch (26, 42, 48) by the bridge arch (26, 42, 48) being supported on the upper sides of the spring rails (24) via supporting feet (30, 44, 46), being fixedly connected to the spring rails (24) and spanning a back strip (22) which upwardly bounds the longitudinal grooves, **characterized in that** the supporting foot (30, 44, 46) extends beyond the bridge arch (26, 42, 48) in the longitudinal direction (28) of the spring rails (24).

2. Wiper blade (10) according to Claim 1, **characterized in that** the supporting length (36) of the supporting foot (30, 46) or of the supporting feet (30, 44) is greater at one end of a spring rail (24) than half the span width (34) of the bridge arch (26, 42, 48).

3. Wiper blade (10) according to Claim 1 or 2, **characterized in that** the supporting feet (30, 46) are connected to the spring rails (24) via two connecting points (32) in each case.

4. Wiper blade (10) according to Claim 2 or 3, **characterized in that** a tab (38) pointing towards the centre of the wiper blade (10) and having a fixing claw (40), the free end of which lies within the supporting length (36), is arranged on the bridge arch (26).

5. Wiper blade (10) according to one of Claims 1 to 4, **characterized in that** two bridge arches (26, 42 or 48) are in each case provided at the ends of the spring rails (24) at a distance from each other such that the supporting feet (30, 44 or 46) and the distance result in a sufficient supporting length (36).

6. Wiper blade (10) according to Claim 5, **characterized in that** the bridge arches (26, 48) have common supporting feet (46) each having two connecting points (32) to the associated spring rail (24).

7. Wiper blade (10) according to Claim 5 or 6, **characterized in that** the tab (38) having the fixing claw (40) is arranged between the bridges (26, 46 or 48).

8. Wiper blade (10) according to Claim 7, **characterized in that** the bridge arch (48) which is opposite the bridge arch (26) with the tab (38) has a cutout (50) facing the tab (38).

## Revendications

1. Balai d'essuie-glace (10) comprenant une raclette de balai d'essuie-glace (12), dans les rainures longitudinales latérales de laquelle sont insérés deux rails élastiques (24) servant d'élément de support élastique à ressort, les extrémités des rails élastiques (24) étant connectées l'une à l'autre par au moins un arc de pontage (26, 42, 48), l'arc de pontage (26, 42, 48) s'appuyant en l'occurrence par le biais de pieds de support (30, 44, 46) sur les côtés supérieurs des rails élastiques (24), étant connecté fixement aux rails élastiques (24) et surmontant une baguette arrière (22) limitant vers le haut les rainures longitudinales, **caractérisé en ce que** le pied de support (30, 44, 46) s'étend dans la direction longitudinale (28) des rails élastiques (24) au-delà de l'arc de pontage (26, 42, 48).

2. Balai d'essuie-glace (10) selon la revendication 1, **caractérisé en ce que** la longueur du support (36) du pied de support (30, 46) ou des pieds de support (30, 44) à une extrémité d'un rail élastique (24), est supérieure à la moitié de la largeur de l'étendue (34) de l'arc de pontage (26, 42, 48).

3. Balai d'essuie-glace (10) selon la revendication 1 ou 2, **caractérisé en ce que** les pieds de support (30, 46) sont à chaque fois connectés par le biais de deux points de connexion (32) aux rails élastiques (24).

4. Balai d'essuie-glace (10) selon la revendication 2 ou 3, **caractérisé en ce qu'**une patte (38) avec un rebord de fixation (40), tournée vers le centre du balai d'essuie-glace (10), est disposée sur l'arc de pontage (26), son extrémité libre se situant à l'intérieur de la longueur du support (36).

5. Balai d'essuie-glace (10) selon l'une quelconque des revendications 1 à 4, **caractérisé en ce que** deux arcs de pontage (26, 42 respectivement 48) sont à chaque fois prévus à distance l'un de l'autre aux extrémités des rails élastiques (24) de sorte que les pieds de support (30, 44 respectivement 46) et la distance en question produisent une longueur de support suffisante (36).

6. Balai d'essuie-glace (10) selon la revendication 5, **caractérisé en ce que** les arcs de pontage (26, 48) possèdent des pieds de support communs (46) étant à chaque fois deux points de connexion (32) au rail élastique associé (24).

7. Balai d'essuie-glace (10) selon la revendication 5 ou 6, **caractérisé en ce que** la patte (38) est disposée avec le rebord de fixation (40) entre les ponts (26, 46 respectivement 48).

8. Balai d'essuie-glace (10) selon la revendication 7, **caractérisé en ce que** l'arc de pontage (48) qui est en regard de l'arc de pontage (26) avec la patte (38), présente un évidement (50) tourné vers la patte (38).
